# EUROPEAN PATENT SPECIFICATION

(11) **EP 1 064 979 B1**
(45) Date of publication and mention of the grant of the patent: **15.02.2006**
(21) Application number: 00850121.5
(22) Date of filing: 29.06.2000
(51) Int. Cl.: B01D 53/04, B01D 45/10, B01D 53/02

(54) **Air filter and method for manufacture of an air filter**
Luftfilter und Verfahren zur Herstellung eines Luftfilters
Filtre à air et procédé de fabrication d'un filtre à air

(30) Priority: 01.07.1999 SE 9902521
(43) Date of publication of application: 03.01.2001
(73) Proprietor: Glehn & Co. AB, 182 61 Djursholm (SE)
(72) Inventor: Von Glehn, Andreas, S-102 61 Djursholm (SE)
(74) Representative: Karlsson, Leif Karl Gunnar

(56) References cited:
- EP-A- 0 134 297
- DE-A- 3 711 294
- US-A- 4 534 775
- US-A- 5 085 766

## Description

The present invention concerns in a first respect an air filter of the kind referred to in the descriptive part of claim 1, and
a method for production of an air filter.

The indoor air which is inhaled by western people throughout more than 90 % of their time contains among other things emissions from materials produced by humans. Plastics, paints and solvents emit gases in molecular form or droplets. Especially for filtering of gases and to remove odours, active carbon, Pyrafil™ or other active substances are used today.

These are either adhesively bonded to a carrier medium, or filled as a powder of various grain size into filter containers of transparent or net type.

In addition to the gases requiring filtration, the indoor air always carries amounts of particles or fat droplets, as in the fumes in a restaurant, and consequently the air should be filtered before it reaches the gas adsorbtion filter. Otherwise this would be clogged very soon and would require replacement, which is costly and reduces the filtration efficiency. Drawbacks of prefiltering of the air in a separate prefilter are a larger installation, a higher total pressure loss over the installation, leading to higher costs for investment and service, including costs for filter, energy and maintenance.

The noise level from the installation is also increased, since the higher pressure loss requires more powerful fans, which in many cases may prevent use of filters indoors.

Through WO 84/04467 is previously known a device comprising long flexible or wobbly strips of an air-permeable material hanging as a wreath in front of a porous air-permeable filter wall. The main purpose of the flexible strips is to knock particles away from the surface of the surrounding filter, thus extending its life length, but also producing some static electricity.

Through SU 1 125 053 is also previously known a device described as a grid carrying long wide polymer strips to generate static electricity and located in front of a smoke filter.

Through SE 500 636 is also previously known a device with filter action along longitudinal freely hanging fibers or slender elements with free ends, supported by a carrier unit which is introduced in a conduit. The carrier unit extends across the conduit and is provided with air distributing tubes. The rubbing of the vibrating fibers against each other generates an electrostatic field utilized to attract and catch microscopic particles.

The fiber material can as in SU 1 125 053 mentioned above be a polymer. The three patented devices have in common the purpose of filtering micro-particles from air and the principle of mechanically knocking particles from a surrounding filter and generating electrostatic forces to attract micro-particles

Through SE 502 891 is also previously known an electrostatic filter comprising a multitude of strips forced to rub against each other to produce static electricity. As in the filters mentioned above, it is presumed that the elements must be able to move and rub against each other to produce the electric charge.

The known air filters mentioned above are basically intended for filtering of microparticles, not for gases or odours in molecular or liquid form. Especially, the occurrence of liquid droplets in fumes or solvents will prevent the electrostatic action and clog the filters.

The document US-A-50585766 describes a filter comprising adsorbent strips with a surface coating material in a housing.

The first purpose of the present invention is with respect of this background to provide an air filter to remove gases and fumes in molecular or liquid form, as well as filtering of microparticles.

This purpose is according to a first aspect of the invention achieved when an air filter of the kind described in the descriptive part of claim 1 has the special traits mentioned in the characterizing part of the claim.

Due to a chemical pretreatment of the adsorbtive bodies a good filtration effect is achieved, for gases and fumes basically through chemical bonding, polar bonding and adsorbtion, but also through pure attraction. Compared to other filters, the filtering then occurs over a larger surface and with a smaller pressure loss.

In one embodiment of the filter insert, where the adsorbtive elements are combined with an active filter medium, the lifetime of this can be considerably increased. The chemically active surface coating of the adsorbtion elements can be made in two variants, either a wet coating or a dry coating. For certain applications, the wet coating will permit a higher reaction rate and a stronger bonding.

The bonding can be achieved through chemical bonding, polar bonding or adsorbtion.

According to one preferred embodiment of the air filter, each adsorbtive body is provided with a surface coating material. Through a suitable choice of surface coating material even the liquid droplet pollutants can be adsorbed.

In one preferred embodiment the surface coating material is positively charged. Since bacteria and viruses often are negatively charged, this enhances the adsorbtion.

The adsorbtive body is preferably porous. This makes a very large adsorbtive surface to be coated by the surface coating material.

According to one preferred embodiment, the adsorbtive bodies are elongate and arranged parallel to the flow direction. The air will then flow lengthwise through the bodies and the adsorbtion will be increased by layered flow. The flow resistance will be less than if the air had to flow crosswise through the bodies.

According to another preferred embodiment, the adsorbtive bodies are encased in a casing with a cylindrical wall extending from the inlet end of the filter to its outlet end. The function of the casing is to keep the adsorbive bodies together, and to keep the air flowing along the bodies during an extended time. According to the invention, the casing wall is provided with longitudinal slots. Part of the air flowing through the adsorbtive filter bodies will escape through these slots, and by adjusting the exit area it is possible to adjust the fraction of the air flow through the slots to get a suitable flow pattern through the adsorbtive bodies.

In some cases it may be preferable to provide the surface coating material with components with desinfectant or deodorant properties.

The preferred embodiments mentioned above are described in the claims dependent on claim 1.

The method according to the invention as described in claim 4 offers a suitable method for simple and efficient manufacture of an air filter according to the invention.

The invention is further explained with reference to the following detailed descriptions of preferred embodiments with accompanying figures.
Figure 1 is a side view of a filter insert to filter according to the invention.
Figure 2 is a view of the filter insert of figure 1 from above.
Figure 3 is a perspective view of a cover for a filter according to the invention.
Figure 4 is a side view of a cover for a filter according to a second embodiment of the invention.
Figure 5 is a side view of part of a cover for a filter according to a third embodiment of the invention.
Figure 6 is a perspective view of a cover for a filter according to a fourth embodiment of the invention.

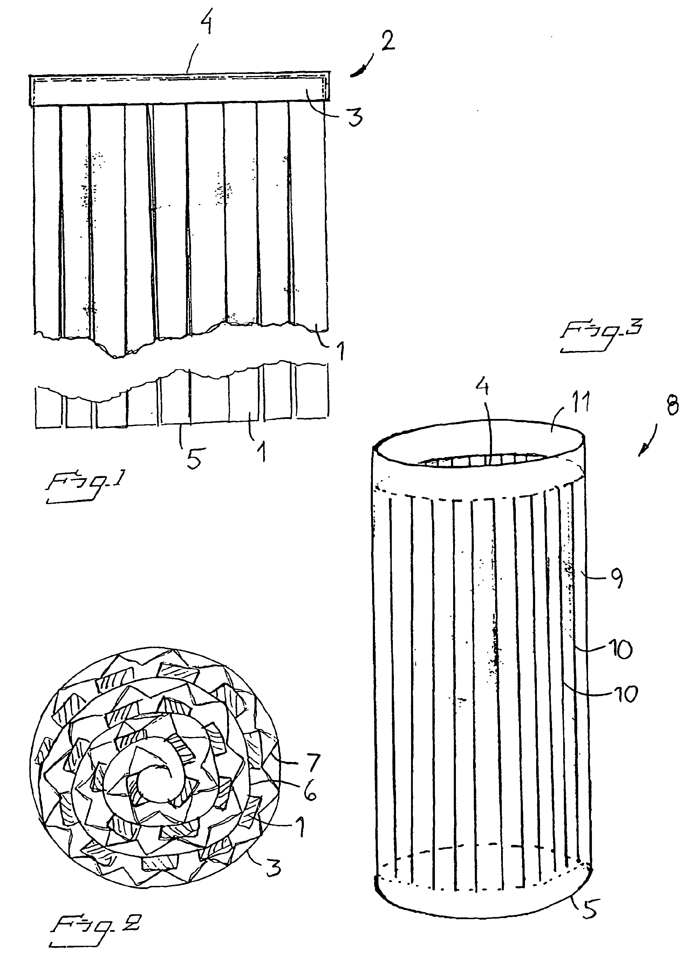

In figure 1 is shown a part of a filter insert for a filter according to the invention. In the illustrated embodiment a number of adsorbtive filter bodies (1) are provided as elongated strips arranged close to each other. The strips (1) can be 250 - 1000 mm long, with a width of 4 - 30 mm. The actual dimensions are determined by the desired capacity. The strip shaped filter bodies (1) are at one end attached to a common carrier (2). Adjacent to the carrier (2) is the air inlet (4) and at the opposite end of the filter bodies (1) is an air exit (5).

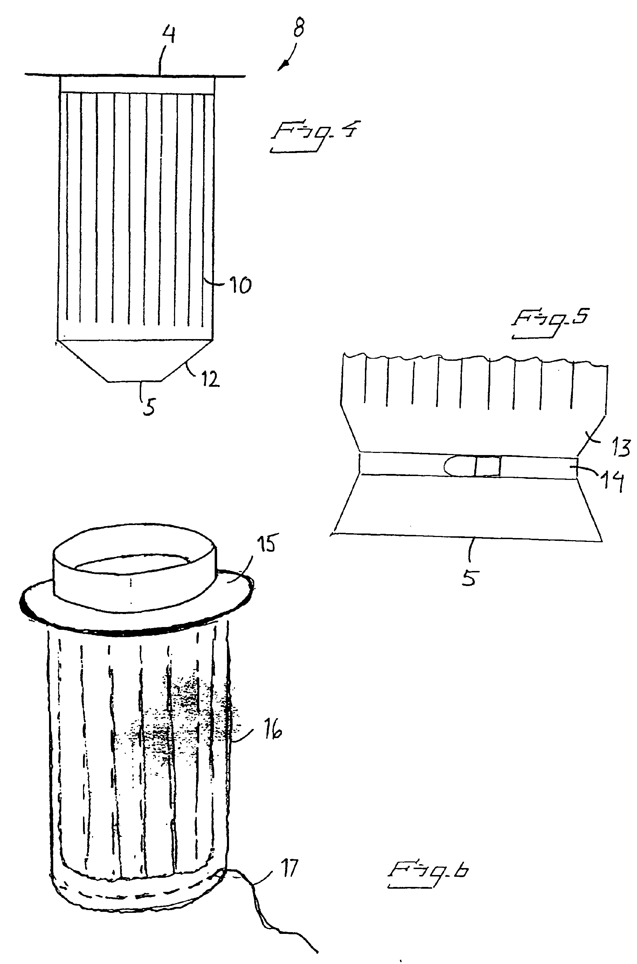

As shown in figure 2, the carrier (2) comprises a girdle part (3), in the illustrated embodiment shown with circular section, but it can naturally also have any arbitrary section fitting the available space, such as rectangular. The air flows from the inlet end (4) to the exit end (5) and is forced to spread along the filter bodies (1). The girdle part (3) which has an axial extent of about 5 - 20 mm encloses a carrier band (6) onto which the ends of the adsorbtive bodies (1) are glued, and a spacing band (7). The latter are spirally wound resulting in almost the whole volume of the insert being filled by adsorbtive filter bodies (1). The carrier band (6) and the spacing band (7) have approximately the same axial extent as the girdle part (3), or slightly less. The spacing band should have folded corrugations. The girdle part (3), the carrier band (6) and the spacing band (7) could all be made from PET-polymer with a thickness of 0.25 - 0.5 mm.

The material of the adsorbtive bodies could be a polymer cloth such as polyester, or active carbon. The material may also be a composite with several parts, such as a carrier cloth and two or more active cloth elements, or a mixture of materials with specific properties for optimal results. Each adsorbtive filter body can have a cross-section with a thickness of 1 - 50 mm, preferably 4 - 20 mm, and a width of 1 - 30 mm, preferably 5 - 15 mm. If desired, the dimensions could be considerably smaller.

For gas adsorbtion an active carbon cloth could be chosen, or the cloth elements be coated with a gas adsorbing reagent or gel. If the air is to be desinfected, the coating may be a dried solution of iodine, potassium permanganate or a medical antiseptic. The cloth elements could also be coated with a trapping agent for microorganisms.

The filter can also be advantageously used for aroma therapy or aroma dispersion. In such a case the cloth elements are coated with an extract or gel containing the etheric oils chosen for the purpose, such as tea-tree, lavender or pine needle oil.

Each adsorbtive body is porous and elastic and is impregnated with a surface coating material through dipping followed by drying or freezing of a chemical reagent suitable for adsorbtion or condensation of oil droplets, solvents, allergens or microorganisms. Th reduce the surface tension of oil droplets the bodies can be pretreated with a chlorine derivative. Since the bodies are porous a relatively large surface will carry the surface coating to adsorbe the pollutants from the air flowing past.

Alternatively, the surface coating can be applied without a following drying. In such a case the filter insert with its wet adsorbtive bodies will have to be enclosed in a sealed package of polymer or aluminium foil, which is later opened prior to installation.

The filter insert is to be mounted in a cover (8), as is shown in figure 3. The cover comprises a casing wall (9) extending from the inlet end (4) to the exit end (5). In the wall are a plurality of axial slots (10) with a relative distance about 5 - 20 mm. The slots penetrate through the wall and do not extend closer to the ends than about 5 - 30 mm. the cover can be made of the same material as the adsorbtive bodies (1). At each end the cover is stiffened by a supporting belt (11), preferably of the same material as the girdle part (3) of the filter insert. The slots (10) permit some of the filtered air to escape radially.

Figure 4 shows a modified embodiment of the cover (8) where the part (12) of it closest to the exit end (5) is conically shaped.

In another embodiment the exit area at the exit end has a variable size. Figure 5 shows an example of this. The exit portion (13) is provided with a corset, where a belt (14) can be tensioned or relaxed to vary the available area for the flow This allows control of the ratio between the flow radially through the slots (10) and the flow axially through the exit end (5).

This is one way to achieve that purpose, but other means are also possible. One such is that the exit can be provided with an exit plate with a hole adjustable by an iris-shutter. It would also be possible to have several plates with different holes among which one is chosen.

In figure 6 is shown an embodiment where the filter is shown as attached to a filter holder (15). The filter cover is provided with a surrounding polymer sheet (16) which is open at the entry and exit ends. At the exit end it is provided with a string closure (17). When the filter is to be replaced, the string (17) is tightened which leaves the filter enclosed in a hygienic plastic container.

### Principles of filtering

Filtering can occur through:
1. Chemical bonding
2. Polar bonding
3. Adsorbtion
4. Attraction

1. Chemical bonding is achieved by coating the porous carrier with an active surface adhesive, which directly or indirectly reacts chemically with the pollutant, which may occur in molecular or droplet form.
2. Polar bonding is achieved by coating the carrier with an active coating which creates a negative or positive surface charge. Pollutants with dipolar molecules will then be oriented towards the surface charge and captured.
3. Adsorbtion is achieved by choosing a carrier made from active adsorbtive material, such as a polymer coated with active carbon or similar. This will adsorb gases is known manner.
4. Attraction is achieved by choosing a carrier where the fibers are electrostatically precharged in known manner.

In addition to the filtering principles mentioned, there is naturally also a pure mechanical/physical filtering.

The different filtering principles can also be combined by mixing carriers with different functions.

To improve the reaction propensity between the pollutant and the surface active adhesive, this may in some applications be exposed in wet status, by keeping the adhesive moist during filtering.

### Field of use for the different principles of filtering

**Dry methods**

| Chemical: | Polar: | Adsorbtion: | Attraction: | Mechanical: |
|---|---|---|---|---|
| Gases | Gases | Gases | Particles | Particles |
| Odours (gas) | Odours (gas) | Odours (gas) | | |
| Solvents (gas) | Solvents (gas) | Solvents (gas) | | |
| Hydrocarbons (gas) | Hydrocarbons (gas) | Hydrocarbons (gas) | | |

**Wet methods**

| Chemical: | Polar: | Adsorbtion: | Attraction: | Mechanical: |
|---|---|---|---|---|
| Gases | Gases | Gases | (Particles) | (Particles) |
| Odours (gas) | Odours (gas) | Odours (gas) | | |
| Solvents (gas) | Solvents (gas) | Solvents (gas) | (Particles) | (Particles) |
| Hydrocarbons (gas) | Hydrocarbons (gas) | Hydrocarbons (gas) | | |

## Claims

1. Air filter comprising a filter insert with adsorptive filter bodies (1) arranged in the flow of air and provided with a surface coating material, wherein the adsorptive filter bodies (1) are shaped as elongated porous strips (1), located in a cover (8) which has an inlet end (4) and an exit end (5) in such a way that the strips (1) are generally parallel to a direction from the inlet end (4) to the exit end (5), and wherein the surface coating material is in a wet status and the air filte also comprises a moisture-proof container surrounding the filter insert in an openable way, **characterized** thereby that the cover (8) comprises an enclosing envelope wall (9) with a multitude of penetrating slots (10) extending generally parallel to a direction from the inlet end (4) to the exit end (5).

2. Air filter according to claim 1, **characterized** thereby that the envelope wall (9) is made from an elastic material, preferably active carbon or the same material as the adsorptive filter bodies (1).

3. Air filter according to any of claims 1 - 2, **characterized** thereby that the surface coating material comprises components with disinfecting and/or aromatic properties.

4. Method for manufacture of an air filter according to any of claims 1 - 3, **characterized** thereby that the adsorptive filter bodies (1) are dipped in wet surface coating material, and that the filter insert after the dipping is enclosed in a container to retain moisture.

## Revendications

1. Filtre à air comprenant un insert de filtre comportant des corps filtrants adsorbants (1) placés dans le courant d'air et pourvus d'un matériau formant revêtement de surface, les corps filtrants adsorbants (1) présentant une forme de bandes poreuses (1) allongées, situées dans un élément de recouvrement (8) qui présente une extrémité d'entrée (4) et une extrémité de sortie (5), de telle sorte que les bandes (1) soient globalement parallèles à une direction allant de l'extrémité d'entrée (4) à l'extrémité de sortie (5), et le matériau formant revêtement de surface se trouvant à l'état humide, et le filtre à air comprenant également un récipient résistant à l'humidité entourant l'insert de filtre, avec possibilité d'être ouvert, **caractérisé en ce que** l'élément de recouvrement (8) comprend une paroi (9) formant enveloppe présentant une multitude de fentes (10) pénétrantes s'étendant de façon globalement parallèle à une direction allant de l'extrémité d'entrée (4) à l'extrémité de sortie (5).

2. Filtre à air selon la revendication 1, **caractérisé en ce que** la paroi (9) formant enveloppe est constitué en matériau élastique, de préférence en charbon actif ou dans le même matériau que les corps filtrants adsorbants (1).

3. Filtre à air selon l'une quelconque des revendications 1-2, **caractérisé en ce que** le matériau formant revêtement de surface comprend des composants présentant des propriétés désinfectantes et/ou aromatiques.

4. Procédé de fabrication d'un filtre à air selon l'une quelconque des revendications 1-3, **caractérisé en ce que** les corps filtrants adsorbants (1) sont trempés dans le matériau formant revêtement de surface humide, et **en ce que** l'insert de filtre, après trempage, est enfermé dans un récipient pour retenir l'humidité.

## Patentansprüche

1. Luftfilter, umfassend einen Filtereinsatz mit adsorbierenden Filterkörpern (1), angeordnet im Luftstrom und ausgestattet mit einem Oberflächenüberzugs- bzw. -beschichtungsmaterial, wobei die adsorbierenden Filterkörper (1) ausgebildet bzw. geformt sind als durchlässige bzw. mit Poren versehene Streifen(1), sich in einer Umhüllung (8) befindend, welche ein Einlaß-Ende (4) und ein Austritts-Ende (5) aufweist auf eine Art und Weise, daß die Streifen (1) im Wesentlichen parallel zur Richtung vom Einlaß-Ende (4) zum Austritts-Ende (5) sind, und wobei das Oberflächenüberzugsmaterial sich in einem nassen Zustand befindet und der Luftfilter weiterhin umfaßt einen feuchtigkeitsgeprüften bzw. -beständigen Behälter, der den Filtereinsatz auf eine sich öffnen lassende Art und Weise umgibt, **dadurch gekennzeichnet, daß** die Umhüllung (8) eine einschließende einhüllende Wand bzw. Außenwand (9) umfaßt, mit einer Mehrzahl an durchdringenden Schlitzen (10), welche sich im Wesentlichen parallel zu einer Richtung vom Einlaß-Ende (4) zum Austritts-Ende (5) erstrecken.

2. Luftfilter gemäß Anspruch 1, **dadurch** gekenzeichnet, daß die Außenwand (9) aus elastischem Material, vorzugsweise Aktivkohle oder demselben Material wie die adsorbierenden Filterkörper (1) gefertigt ist.

3. Luftfilter gemäß einem der Ansprüche 1-2, **dadurch gekennzeichnet, daß** das Oberflächenüberzugsmaterial Bestandteile mit desinfizierenden und/oder aromatischen Eigenschaften umfaßt.

4. Verfahren zur Herstellung eines Luftfilters nach einem der Ansprüche 1-3, **dadurch gekennzeichnet, daß** die adsorbierenden Filterkörper (1) in nasses Oberflächenüberzugsmaterial eingetaucht werden, und daß der Filtereinsatz nach dem Eintauchen in einen Behälter eingeschlossen wird, um Feuchtigkeit zurückzuhalten.
